# EUROPÄISCHE PATENTSCHRIFT

(11) **EP 3 925 192 B1**
(45) Veröffentlichungstag und Bekanntmachung des Hinweises auf die Patenterteilung: **30.08.2023**
(21) Anmeldenummer: 20704514.7
(22) Anmeldetag: 10.02.2020
(51) Int. Cl.: H04L 9/40, B60R 16/023, H04L 9/32, H04L 12/40, H04L 67/12, H04L 43/50

(54) **VERFAHREN UND WIEDERGABEEINHEIT ZUR WIEDERGABE VON GESICHERTEN NACHRICHTEN**
METHOD AND REPRODUCTION UNIT FOR REPRODUCING PROTECTED MESSAGES
PROCÉDÉ ET UNITÉ DE REPRODUCTION SERVANT À LA REPRODUCTION DE MESSAGES SÉCURISÉS

(30) Priorität: 11.02.2019 DE 102019103331
(43) Veröffentlichungstag der Anmeldung: 22.12.2021
(73) Patentinhaber: dSPACE GmbH, 33102 Paderborn (DE)
(72) Erfinder: MÜLLER, Björn, 33102 Paderborn (DE)
(86) Internationale Anmeldenummer: PCT/EP2020/053254
(87) Internationale Veröffentlichungsnummer: WO 2020/165067

(56) Entgegenhaltungen:
- DE-A1-102017 107 879
- US-A1- 2017 331 699
- US-A1- 2018 148 006
- MARTIN HORAUER ET AL: "A Test Tool for FlexRay-based Embedded Systems", INDUSTRIAL EMBEDDED SYSTEMS, 2007. SIES '07. INTERNATIONAL SYMPOS IUM ON, IEEE, PI, 1. Juli 2007 (2007-07-01), Seiten 349-352, XP031131542, ISBN: 978-1-4244-0839-9
- Marc Weber: "New Communication Paradigms in Automotive Networking", , 1. August 2015 (2015-08-01), XP055682495, Gefunden im Internet: URL:https://web.archive.org/web/2019051612 1255if_/https://assets.vector.com/cms/cont ent/know-how/_technical-articles/Ethernet_ CANFD_AutomobilElektronik_201508_PressArti cle_long_EN.pdf [gefunden am 2020-04-02]

## Beschreibung

Die Erfindung betrifft ein Verfahren und ein System zum Versenden aufgezeichneter gesicherter Nachrichten über ein Nachrichtensystem an ein zu testendes Empfängergerät, insbesondere ein zu testendes Steuergerät.

Im Bereich der Bussimulation für den Test von Steuergeräten, beispielsweise im automotiven Bereich, liegt der Fokus darauf, die Buskommunikation eines oder mehrerer Steuergeräte möglichst realitätsnah nachzubilden. Im Bereich der Steuergeräte (ECU)-Absicherung ist auch die Manipulation der Buskommunikation relevant.

Die Buskommunikation kann dabei durch eine "Live"-Simulation in einer Testumgebung (z.B. mittels der Produkte MicroAutobox, VEOS oder SCALEXIO der dSPACE GmbH für eine Offline- bzw. eine Hardware-in-the-Loop (HIL)-Simulation) oder durch Wiedergabe (Replay) einer aufgenommenen Buskommunikation nachgebildet werden. Ein Replay-System ist auch beschrieben in MARTIN HORAUER ET AL: "A Test Tool for FlexRay-based Embedded Systems", INDUSTRIAL EMBEDDED SYSTEMS, 2007. SIES '07. INTERNATIONAL SYMPOSIUM ON, IEEE, Pl, 1. Juli 2007 (2007-07-01), Seiten 349-352.

Im einfachsten Fall ist für die in Fahrzeugen verwendete Kommunikation vorgesehen, dass die übertragenen Signale als alleinige Nutzlast in Bus- oder Netzwerknachrichten versendet werden.

Neue Standards (AUTOSAR ≥4.2.1 sowie FIBEX ≥4.1.2) erweitern dieses jedoch, so dass die Nutzdaten zusätzlich authentifiziert oder geschützt werden (siehe z.B. Secure Onboard Communication, Cryptograpgic PDU, Transport Layer Security, IPsec (Internet Protocol Security)).

Die in einem Steuergerät oder im Rahmen einer Bussimulation erzeugten Daten werden für Testzwecke vielfach zur späteren Wiedergabe aufgenommen. Bisher war es möglich, die aufgenommene Buskommunikation unverändert wieder abzuspielen, um so einem oder mehreren Empfängersteuergeräten eine korrekte Buskommunikation zu simulieren.

Das Loggen der Buskommunikation kann beispielsweise durch Werkzeuge der dSPACE GmbH (Bus Navigator oder Autera) vorgenommen werden. Solche Werkzeuge sind oft auch in der Lage die aufgenommene und abgespeicherte Buskommunikation wiederzugeben.

Die neuen Verschlüsselungs- und Authentifizierungsalgorithmen der oben genannten Standards zielen darauf ab, sogenannte Replay-Attacken zu verhindern. Mit solchen Algorithmen gesicherte Buskommunikation kann daher nicht ohne Weiteres für die Stimulation von Steuergeräten mittels einfacher Wiedergabe (Replay) verwendet werden.

In der Regel enthalten die im Fahrzeug aufgenommenen oder mit einem Simulator zu Testzwecken simulierten gesicherten Nachrichten Informationen bestehend aus Header, Nutzdaten, monoton steigendem Zählerwert und Authentifizierungscode (verschlüsselt).

Das Problem bei der Wiedergabe besteht darin, dass zwar die Nutzdaten korrekt sein mögen, dass aber aller Wahrscheinlichkeit nach der Zählerwert der aufgenommenen Daten nicht zum Zählerwert des zu testenden Steuergeräts passt (da der Counter monoton steigend ist, kann dieser auch nicht verändert werden). Selbst wenn dieser zurückgesetzt werden könnte, passt der für die Authentifizierung erstellte Authenticatorwert (auch Authenticator) nicht mehr zum Zählerwert, da sich der verschlüsselte Authenticatorwert aus einem anhand der Nutzdaten ermittelten Wert und dem Zählerwert zusammensetzt. Bei der Weitergabe von Nachrichten zwischen verschiedenen Bussystemen in einem Fahrzeug kann dies ebenfalls zu Problemen führen, wenn einige der Bussysteme ein Authentifizierung erfordern, andere nicht. Um Nachrichten zwischen den unterschiedlichen Bussystemen austauschen zu können, wird beispielsweise in der US 2018/148006 A1 ein Gateway beschrieben, welches Nachrichten manipuliert, indem vor der Weiterleitung der Nachrichten von einem Bussystem in das nächste je nach Bedarf der Authenticator und der Zählerwert aus den eingehenden Nachrichten entfernt und/oder den neuen Nachrichten hinzugefügt werden.

Falls das oben genannte Problem bei der Wiedergabe der Daten zum Testen von Steuergeräten bisher in den frühen Entwicklungsphasen auftrat, wurde üblicherweise die Authentifizierung im Empfängersteuergerät deaktiviert. In diesem Fall kann aber die Authentifizierung nicht mehr getestet werden.

Vor diesem Hintergrund besteht die Aufgabe der Erfindung darin, ein Verfahren und eine Wiedergabeeinheit zum Testen von Steuergeräten durch Wiedergabe von aufgezeichneten Nachrichten bei implementierten Verschlüsselungs- und Authentifizierungsalgorithmen anzugeben, die den Stand der Technik weiterbilden.

Die Aufgabe wird durch das anfangs genannte Verfahren gelöst, wobei das Verfahren die Schritte aufweist:
- Bereitstellen erster gesicherter Nachrichten zur Verarbeitung in einer Wiedergebeeinheit, wobei die ersten Nachrichten eine Nutzlast, einen ersten Zählerwert und einen ersten Authenticator aufweisen, wobei in der Wiedergabeeinheit folgende Informationen hinterlegt, bzw. der Wiedergabeeinheit zur Verfügung gestellt sind (d.h. die Informationen sind entweder in einem der Wiedergabeeinheit zugeordneten Speicher gespeichert oder die Wiedergabeeinheit hat Zugriff auf die in der Testumgebung gespeicherten Informationen):
   ∘ Mindestens Teile einer Kommunikationsbeschreibung für das zu testende Empfängergerät oder ein Algorithmus zur Dateninterpretation,
   ∘ Ein zweiter Zählerwert für das zu testende Empfängergerät,
   ∘ Informationen zur Verschlüsselung und ein entsprechender Schlüssel,
- mittels der Wiedergabeeinheit:
   ∘ Entfernen des ersten Authenticators und des ersten Zählerwertes aus den ersten gesicherten Nachrichten unter Verwendung der Kommunikationsbeschreibung oder unter Verwendung mittels des Algorithmus zur Dateninterpretation gewonnener Informationen,
   ∘ Erstellen zweiter gesicherter Nachrichten durch Hinzufügen jeweils des zweiten Zählerwerts und Erstellen und Hinzufügen jeweils eines zweiten Authenticators unter Verwendung des zweiten Zählerwerts, der Informationen zur Verschlüsselung sowie des Schlüssels und unter Verwendung der Kommunikationsbeschreibung oder der mittels Anwendung des Algorithmus zur Dateninterpretation gewonnenen Informationen,
- Versenden der zweiten gesicherten Nachrichten an das zu testende Empfängergerät.

Kern des erfindungsgemäßen Verfahrens ist es, dass mittels der erfindungsgemäßen Wiedergabeeinheit zur Wiedergabe der Daten die aufgenommenen gesicherten Nachrichten vor der Wiedergabe so manipuliert werden, dass ein Empfangsgerät diese als korrekte Nachrichten annimmt. Um diese Manipulation überhaupt zu ermöglichen, werden in der Wiedergabeeinheit entweder (benötigte Anteile) einer Kommunikationsbeschreibung (z.B. (mindestens Teile einer) Kommunikationsmatrix, auch K-Matrix genannt) oder ein Algorithmus zur Interpretation der in den Nachrichten erhaltenen Daten hinterlegt, sodass der Zählerwert und der Authenticator in den Nachrichten identifiziert werden können.

Das erfindungsgemäße Wiedergabewerkzeug (die Wiedergabeeinheit) trennt anhand einer eingelesenen Kommunikationsbeschreibung die einzelnen Nachrichtenbestandteile. Im weiteren Verlauf des Verfahrens werden dabei die Informationen des Headers und der Nutzdaten wiederverwendet. Bevorzugt werden auf Basis der in der Kommunikationsbeschreibung enthaltenen Informationen und der durch den Nutzer festgelegten Informationen zur Verschlüsselung für die Wiedergabe ein neuer steigender Zählerwert und ein den Nutzdaten, dem Zählerwert und dem Verschlüsselungsalgorithmus entsprechender neuer und passender Authentifizierungscode (Authenticator) generiert. Die Informationen zur Verschlüsselung hängen davon ab, wo die Erfindung eingesetzt wird, bzw. welcher Schutzmechanismus vorliegt (Beispiele sind SecOC oder IPSec,...). Sie umfassen beispielsweise den Verschlüsselungsalgorithmus und evtl. weitere den Verschlüsselungsalgorithmus betreffende Informationen, z.B., worauf der Algorithmus angewendet wird (Bit oder Byte)). Mit diesen Informationen wird eine neue komplette Nachricht generiert, bzw. die ursprüngliche erste (aufgrund des veralteten Zählerwerts/Authenticators obsolete) Nachricht zu einer zweiten Nachricht wiederaufbereitet, welche durch das Empfängergerät (d.h. das zu testende (Steuer)Gerät) akzeptiert wird.

Der aktuelle Zählerwert (z.B. in Form eines sogenannten Freshnessvalues oder einer Sequenznummer) für das zu testende Steuergerät liegt in der Regel global vor und ist somit der Testumgebung (d.h. dem HIL-Simulator oder dem Offline-Simulator oder einem mit dem Simulator verbundenen Host-PC) bekannt.

Gemäß der Erfindung ist der zweite Zählerwert durch den der Testumgebung bekannten aktuellen Zählerwert des zu testenden Steuergeräts gegeben. In einer alternativen erfindungsgemäßen Ausführungsform ist der zweite Zählerwert durch einen Benutzer vorgebbar oder wird nach einem vorgegebenen Algorithmus berechnet.

Die Wiedergabeeinheit enthält bevorzugt alle Komponenten und/oder Module, welche zur Generierung dieser Werte und dem anschließenden Zusammenfügen notwendig sind. Insbesondere zählen dazu der Log-File Import, der K-Matrix Import, die Deserialisierung, die Zählerwertgenerierung und der Verschlüsselungsalgorithmus. Alternativ können die Komponenten und/oder Module aber auch nur der Wiedergabeeinheit die benötigten Informationen zur Verfügung stellen, ohne in der Wiedergabeeinheit, sondern beispielsweise andernorts in der Testumgebung, implementiert zu sein.

Die oben genannten Komponenten und Module sind einzeln als Teil unterschiedlicher Bussimulationssoftware z.B. RTI CAN MM, FlexRay Configuration Package, Ethernet Configuration Package oder dem Bus Manager) bzw. Bus-Experimentiersoftware (Bus Navigator) bekannt. Ein Unterschied zum Stand der Technik besteht darin, dass in den typischen Anwendungsfällen die Nutzdaten durch ein Offline- oder Echtzeitmodell erzeugt werden, während diese bei dem erfindungsgemäßen Verfahren aus einem Log-File extrahiert, auseinandergenommen und in Kombination mit neuen Inhalten wieder zusammengesetzt werden.

Die Nachrichten werden in Nachrichtenpaketen verschickt, wobei in einer Ausführungsform der Erfindung die Nutzlast, der erste Zählerwert und der erste Authenticator einer Nachricht über mindestens zwei Nachrichtenpakete verteilt versendet werden (beispielsweise enthält ein erstes Nachrichtenpaket den Authenticator und ein zweites Nachrichtenpaket Zählerwert und Nutzlast). In einer anderen Ausführungsform der Erfindung enthält ein Nachrichtenpaket die gesamte Nachricht mit Nutzlast, Zählerwert und Authenticator.

Ob die Nachrichten mit Nutzlast, Zählerwert und Authenticator in einem einzigen Nachrichtenpaket oder über zwei oder mehrere Nachrichtenpakete verteilt versendet werden, wird durch den verwendeten Sicherheitsmechanismus bestimmt. Bei SecOC ist beispielsweise ersteres, bei IPsec zuweilen zweites der Fall. Wichtig ist hierbei nur, dass eine durch einen bestimmten ersten Authenticator gesicherte Nachricht zu Wiedergabezwecken mit einem zweiten, aktuellen Authenticator und mit einem entsprechendem zweiten Zählerwert versehen wird, die den ersten obsoleten Authenticator und den obsoleten ersten Zählerwert ersetzen.

Bevorzugt ist das Empfängergerät durch ein reales Steuergerät gegeben - beispielsweise in einem HIL-Test - oder durch ein virtuelles Steuergerät gegeben, wenn die Buskommunikation im Rahmen einer virtuellen Absicherung getestet werden soll.

Mit virtueller Absicherung ist hier das Testen von Steuergeräten durch Simulation des Steuergerätenetzwerks (und seiner Umgebung, z.B. in Form eines Fahrzeugs und einer Verkehrssituation) ohne konkrete Hardware und mit Hilfe eines entsprechenden Offline-Simulators gemeint, welcher z.B. auch das Zeitverhalten und die Kommunikation eines Steuergeräteverbundes nachbildet. Ein virtuelles Steuergerät ist quasi eine in Software implementierte Vorstufe eines Steuergeräts und enthält in der Regel schon den finalen Seriencode. Es benötigt jedoch noch nicht die echte Hardware des Steuergerätes, wenngleich das zukünftige Betriebssystem in der Regel bereits simuliert wird und realistisches Planungsverhalten basierend auf den für die Funktionalitäten definierten Zeit- und Triggerinformationen nachgebildet ist, sodass das virtuelle Steuergerät z.B. an einen simulierten Bus angeschlossen werden kann (https://www.dspace.com/de/amb/home/news/engineers-insights/blog-virtuals-ecus-1808.cfm ).

In einer weiteren Ausführungsform der Erfindung ist auch die Nutzlast der ersten gesicherten Nachrichten unter Verwendung des ersten Zählerwerts verschlüsselt und wird in der Wiedergabeeinheit zunächst entschlüsselt und anschließend mittels der Verschlüsselung und des zweiten Zählerwerts wieder verschlüsselt.

Welche Anteile der Nachricht zu ent- und zu verschlüsseln sind, ist bevorzugt ebenfalls in den Informationen zur Verschlüsselung enthalten.

In einer Ausgestaltung des erfindungsgemäßen Verfahrens wird dieses auf sogenannte Services (Dienste) angewendet, die in gesicherten Nachrichten übertragen werden, und ermöglicht so auch die Wiedergabe eines sogenannten Service Discovery, beispielsweise von Netzwerk- und/oder Systemdiensten.

Bevorzugt ist das Nachrichtensystem gegeben durch ein Bus-Kommunikationssystem oder ein Netzwerk oder eine Kombination aus Bussystem und Netzwerk, insbesondere durch ein automotives Nachrichtensystem, wobei das Nachrichtensystem real vorliegt oder im Rahmen einer virtuellen Absicherung simuliert wird.

Bevorzugt wird ermöglicht, dass bei der Manipulation, d.h. dem Erstellen der zweiten gesicherten Nachrichten auch gezielt Fehler eingestreut werden. Beispielsweise können Informationen zur Verschlüsselung zusätzliche Informationen umfassen, um die zweiten gesicherten Nachrichten zu Testzwecken derart zu erstellen, dass sie vom Empfängergerät als fehlerhaft erkannt werden sollten. Dadurch lassen sich auch die Sicherheitsmechanismen testen.

Die Aufgabe wird auch gelöst durch eine Wiedergabeeinheit mit den Merkmalen des unabhängigen Anspruchs 9 zur Durchführung des erfindungsgemäßen Verfahrens gelöst.

Die erfindungsgemäße Wiedergabeeinheit erweitert die Funktion der Wiedergabeeinheiten aus dem Stand der Technik insofern, als die versendeten Nachrichten nun nicht mehr nur aus abgespeicherten Nachrichten sondern quasi aus neu generierten bzw. wiederaufbereiteten Nachrichten bestehen, welche teilweise die alten Information (insbesondere die Nutzlast) enthalten, aber mit neuen Informationen (Authenticator und/oder Zählerwert) verändert werden, sodass sie von dem Empfängergerät akzeptiert oder gezielt verworfen werden.

Bevorzugt ist die Wiedergabeeinheit als (Zusatz-)Einheit für einen HIL-Simulator (in Form von Hardware mit entsprechender Software) und/oder für einen Simulator zur virtuellen Absicherung (als reine Softwareeinheit bzw. zusätzliches Programm) ausgestaltet.

Vorteile des erfindungsgemäßen Verfahrens und der erfindungsgemäßen Wiedergabeeinheit sind, dass es erstens nicht erforderlich ist, den Sicherheitsmechanismus im zu testenden Steuergerät zu deaktivieren, um zu ermöglichen, dass das zu testende Steuergerät die zu einem früheren Zeitpunkt aufgenommenen Nachrichten nicht als unzulässige Nachrichten verwirft, und zweitens, dass der Schutzmechnismus selbst, bzw. seine korrekte Ausführung durch das zu testende Steuergerät überprüft werden kann. Somit können nicht nur Safety- sondern auch Security-Funktionen getestet werden.

Durch die Erfindung wird es ermöglicht, abgesicherte Kommunikation im Fahrzeug aufzunehmen und für spätere Absicherungen, z.B. am HIL aber auch bei der virtuellen Absicherung, zu nutzen.

Die Erfindung wird nachfolgend unter Bezugnahme auf die Zeichnungen näher erläutert.

Zur Verdeutlichung der Beschreibung zeigen die Figuren:
- Figur 1: eine gesicherte Nachricht,
- Figur 2: eine schematische Darstellung der Secure Onboard Communication gemäß AUTOSAR 4.2.1.
- Figur 3: eine schematische Darstellung üblicher Steuergerätekommunikation bei Verwendung einer gesicherten Kommunikation,
- Figur 4: das Speichern versendeter Daten mittels eines Datenloggers,
- Figur 5: eine erfindungsgemäße Struktur zur Datenwiedergabe mit geschützter Kommunikation.

Die folgende Beschreibung der Erfindung orientiert sich an der Secure Onboard Communication (SecOC), lässt sich aber auch auf andere Verfahren übertragen.

Bei der Authentifizierung in der SecOC ändert sich die Übertragung auf dem Medium gegenüber ungesicherter Nachrichtenübertragung, da neben den Nutzdaten nun weitere Daten in der Nachricht übertragen werden, welche es dem Empfänger ermöglichen, festzustellen, ob die empfangenen Daten valide sind oder nicht. Aus der ursprünglichen PDU (Protocol Data Unit) welche nur die Nutzdaten enthielt wird nun eine sogenannte "Secured PDU".

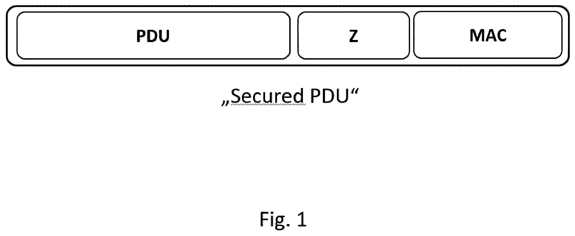

Figur 1 zeigt den Aufbau einer solchen gesicherten Nachricht. Bei einer geschützten Kommunikation nach dem SecOC Standard gemäß AUTOSAR und FIBEX wird die "Secured PDU" übertragen. Diese setzt sich zusammen aus den weiterhin unverschlüsselten Nutzdaten PDU, einem Zählerwert Z und einem verschlüsselten Authenticator MAC. Die Nutzdaten PDU sind nicht verschlüsselt, aber ohne Kenntnis der Kommunikationsbeschreibung, z.B. in Form der sogenannten K-Matrix oder Communication Matrix, fehlt die Information, wo welche Daten zu finden sind (Zählerwert Z (Bei SecOC auch "FreshnessValue" genannt), Authenticator MAC, Nutzlast PDU). Ohne diese Information ist eine Interpretation der Daten aufwändig, kann jedoch z.B. mittels bestimmter Algorithmen ermittelt werden.

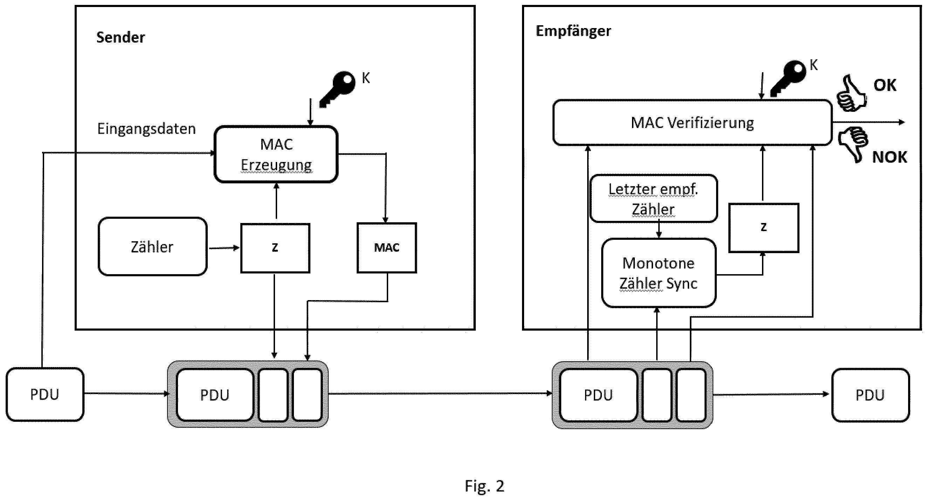

Die gesicherte Nachricht enthält neben den weiterhin unverschlüsselten Nutzdaten (nun PDU oder auch "Authentic PDU" genannt) einen Zählerwert Z (auch "Freshness Value" genannt) und einen Authenticator ("Message Authentication Code" MAC). Dieser Authenticator MAC ist ein verschlüsselter Wert, der mittels eines Schlüsselalgorithmus, eines geheimen Schlüssels K, der Nutzdaten PDU und des Zählerwertes Z berechnet wird. Dieses Vorgehen ist in Figur 2 gezeigt. Bei dem Zählerwert Z handelt es sich um einen kontinuierlichen, monoton steigenden Zählerwert . Auf der Senderseite werden der Zählerwert Z und Informationen/Daten aus der Nutzlast PDU verwendet, um den Authenticator MAC zu erzeugen. Vom Sender wird dann ein Nachrichtenpaket mit Nutzlast PDU, Zählerwert Z und Authenticator MAC erstellt. Auf der Empfängerseite werden der Authenticator MAC und der Zählerwert Z überprüft und anhand der Prüfung entschieden, ob die Nachricht valide ist oder nicht, bzw. ob die Nutzlast verwendet werden darf oder nicht.

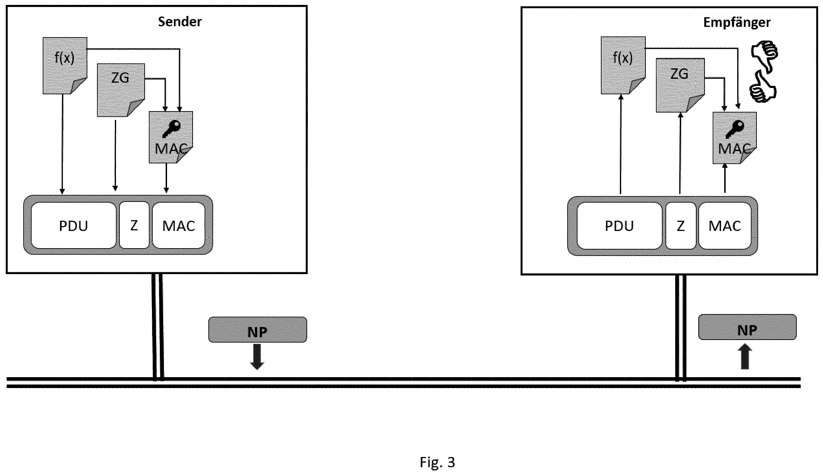

Figur 3 zeigt eine normale Steuergerätekommunikation bei Verwendung einer gesicherten Kommunikation.

In einem Sende-Steuergerät (Sender) werden durch die Applikationssoftware die zu übertragenden Nutzdaten PDU generiert (f(x)). Ferner sind ein Modul zur Zählerwertgenerierung ZG und ein Generator für den Authenticator MAC vorhanden. In den unteren Softwareschichten, wird dann u.a. durch die COM-Konfiguration (Kommunikationsbeschreibung z.B. in Form der K-Matrix) festgelegt, welche Daten in der zu übertragenden Nachricht, bzw. in dem entsprechenden zu übertragenden Nachrichtenpaket NP den Zählerwert Z darstellen und welche den Authenticator MAC.

Komplett verpackt wird diese Nachricht dann als Nachrichtenpaket NP auf dem Bus/Netzwerk verschickt. Auf dem Bus/Netzwerk kann bei den in dem Nachrichtenpaket NP enthaltenen Daten ohne Kenntnis der K-Matrix oder einen passenden Algorithmus zur Dateninterpretation nicht zwischen Nutzdaten PDU, Zählerwert Z und Authenticator MAC differenziert werden.

Beim Test von Steuergeräten, bspw. mit einem HIL für Echtzeittests oder mit einem Offline-Simulator zur virtuellen Absicherung, liegen in der Regel Informationen über die K-Matrix bzw. liegt die K-Matrix vor. Es wäre aber auch möglich Nutzdaten PDU und Zählerwert Z anhand von Datenanalyse (d.h. mittels eines entsprechenden Algorithmus zur Dateninterpretation) zu ermitteln. Diese Verkomplizierung ist aber i.d.R., wegen der Kenntnis über die K-Matrix, zur Ausführung der Erfindung nicht erforderlich, stellt aber eine weitere Ausführungsform der Erfindung dar.

In Figur 3 empfängt das Empfangssteuergerät (Empfänger) die Nachricht und wertet sie in umgedrehter Reihenfolge wie beim Sender aus. Anhand einer Authenicatorprüfung wird im Empfangssteuergerät entschieden, ob die empfangen Nutzdaten PDU für die Applikation, d.h. die entsprechende Funktion f(x) im Empfänger-Steuergerät, verwendet werden oder nicht.

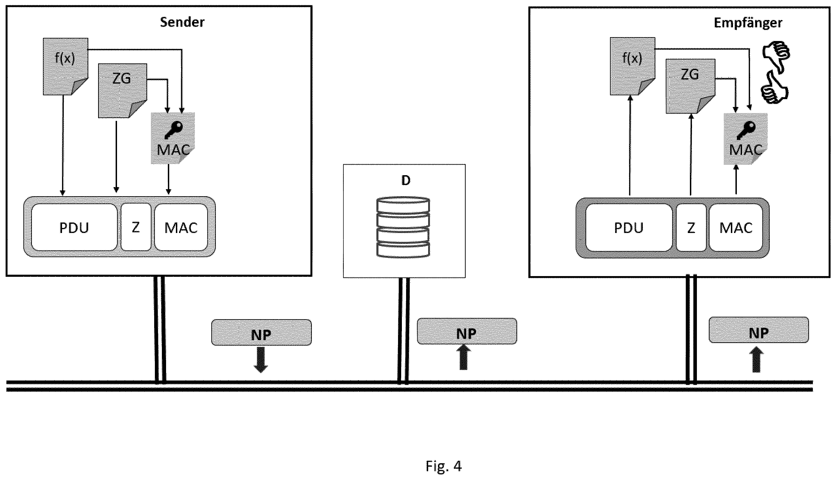

Sofern eine Kommunikation zwischen Steuergeräten für eine spätere Wiedergabe verwendet werden soll, wird die Kommunikation am Bus abgegriffen, bzw. bei einem Netzwerk mittels eines Switches oder Test Access Points gespiegelt. Dies ist in Figur 4 gezeigt. Zur Aufnahme wird typischerweise ein Datenlogger D verwendet, der die Daten auf einem Massenspeicher sammelt. Die Speicherung erfolgt dabei ohne eine Interpretation der Daten.

Bei ungeschützten Kommunikationen können die Daten für eine Stimulation des Empfangssteuergeräts mehr oder minder unverändert (evtl. Anpassung von Zeitstempeln) direkt an das Empfangssteuergerät versendet werden, ohne dass dieses eine Stimulation (Replay, d.h. reine Wiedergabe/erneutes Aufspielen von aufgezeichneten Nachrichten) detektieren kann.

Im Fall einer geschützten Kommunikation können die aufgenommen Daten aber nicht mehr ohne weitere Manipulation verwendet werden, da mittels des monotonen Zählers im Empfangssteuergerät detektieren würde, dass die Nachricht veraltet ist. Eine ausschließliche Änderung des Zählers würde jedoch auch keinen Erfolg bringen, da der Zählerwert zusammen mit den Nutzdaten in die Berechnung des Authenticators MAC eingeflossen ist.

Die vorgeschlagene Lösung beruht also darauf, von den aufgenommenen Daten nur noch die Nutzdaten wiederzuverwenden und die restlichen Signale der Secured PDU (Zählerwert Z und Authenticator MAC) im Wiedergabegerät (Wiedergabeeinheit) R neu zu berechnen.

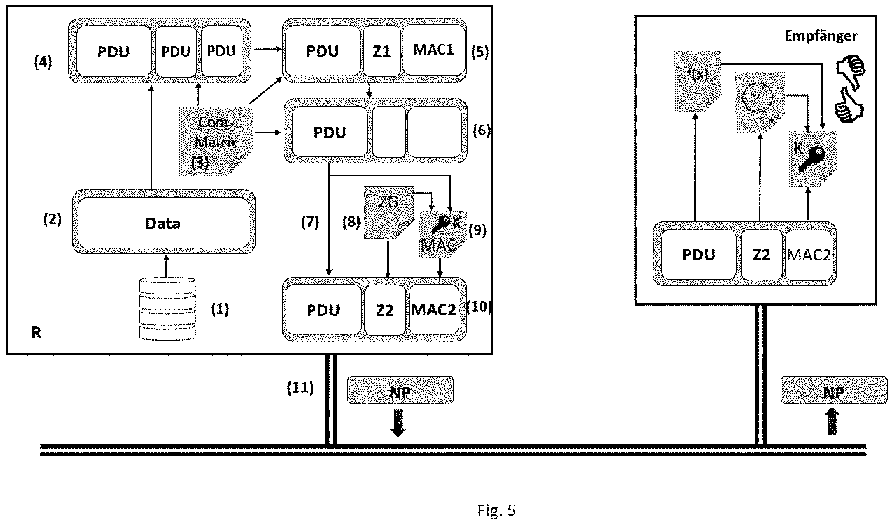

Figur 5 zeigt ein Ausführungsbeispiel des erfindungsgemäßen Verfahrens mit einer erfindungsgemäßen Wiedergabeeinheit R.

Die aufgenommenen Daten (gesicherte Nachrichten) werden von Massenspeicher (1) ausgelesen. Es handelt sich dabei um Rohdaten (2), d.h. vollkommen uninterpretierte Daten, bei denen nicht klar ist, wo die Signale liegen und wie sie codiert sind. Durch eine in dem Wiedergabegerät R vorhandene oder eingelesene Kommunikationsmatrix (3) können die Daten nun dekodiert und interpretiert werden (4). (Decodierung und Interpretation sind im Stand der Technik keine Aufgaben von Replayeinheiten. Diese spielen nur Daten ab, verändern höchstens den Zeitstempel). Anhand der Information aus der Kommunikationsmatrix (3) können nun auch die Signale des ersten Zählerwerts Z1 und des ersten Authenticators MAC1 identifiziert (5) und herausgefiltert (6) werden. Die Nutzdaten PDU werden für die zu versendende Nachricht wiederverwendet (7). Die Signale für den zweiten Zählerwert Z2 und den zweiten Authenticator MAC2 werden wie im Steuergerät oder bei der Bussimulation im HIL- oder Offline-Simulator auch im Wiedergabegerät R neu erzeugt ((8) und (9)). Zweiter Zählerwert Z2 und Schlüssel K werden dabei beispielsweise vom Nutzer bereitgestellt. Zusammen mit den Nutzdaten PDU wird daraus wieder eine valide Nachricht zusammengesetzt (10), welche dann als Nachrichtenpaket NP über den Bus bzw. das Netzwerk versendet wird (11).

Eine weitere Ausführungsform der Erfindung besteht darin, die Signale für den Zählerwert Z und den Authenticator MAC gezielt zu manipulieren, um die Absicherungsmaßnahmen im Empfangssteuergerät zu testen. So kann mit einem korrekten Zählerwert Z aber einem falschen Authenticator MAC gearbeitet werden, oder der Authenticator MAC ist korrekt und der Zählerwert Z ist falsch.

Bei anderen Sicherheitsmechanismen als der SecOC wird möglicherweise die Nachricht mit Nutzdaten, Zählerwert und Authenticator nicht in einem einzigen Nachrichtenpaket, sondern über mehrere Nachrichtenpakete verteilt verschickt, beispielsweise bei IPsec oder cryptographic PDUs. Das erfindungsgemäße Verfahren ist auch auf solche Verfahren anwendbar. Leichte Änderungen müssen dann eventuell bezüglich des Zählerwertes vorgenommen werden. Bei IPsec muss der Zählerwert - dort Sequenznummer genannt - beispielsweise nicht monoton steigend sein, sondern in einem bestimmten Fenster von Sequenznummern liegen ("sliding window").

## Patentansprüche

1. Verfahren zum Versenden aufgezeichneter gesicherter Nachrichten über ein Nachrichtensystem an ein zu testendes Empfängergerät, wobei die Nachrichten mittels Nachrichtenpaketen versendet werden, wobei das Verfahren folgende Schritte aufweist:
• Bereitstellen erster gesicherter Nachrichten zur Verarbeitung in einer Wiedergabeeinheit (R), wobei die ersten Nachrichten eine Nutzlast (PDU), einen ersten Zählerwert (Z1) und einen ersten Authenticator (MAC1) aufweisen, **dadurch gekennzeichnet, dass** der Wiedergabeeinheit folgende Informationen zur Verfügung gestellt sind:
∘ Mindestens Teile einer Kommunikationsbeschreibung für das zu testende Empfängergerät oder ein Algorithmus zur Dateninterpretation,
∘ Ein zweiter Zählerwert (Z2) für das zu testende Empfängergerät, wobei der zweite Zählerwert (Z2) jeweils durch den der Testumgebung bekannten aktuellen Zählerwert für das zu testende Empfängergerät gegeben ist oder wobei der zweite Zählerwert (Z2) durch einen von einem Benutzer vorgegebenen Zählerwert oder durch einen automatisch berechneten Zählerwert gegeben ist,
∘ Informationen zur Verschlüsselung und ein entsprechender Schlüssel (K)
• mittels der Wiedergabeeinheit:
∘ Entfernen des ersten Authenticators (MAC1) und des ersten Zählerwertes (Z1) aus den ersten gesicherten Nachrichten unter Verwendung der Kommunikationsbeschreibung oder unter Verwendung mittels des Algorithmus zur Dateninterpretation gewonnener Informationen
∘ Erstellen zweiter gesicherter Nachrichten durch Hinzufügen jeweils des zweiten Zählerwerts (Z2) und Erstellen und Hinzufügen jeweils eines zweiten Authenticators (MAC2) unter Verwendung des zweiten Zählerwerts (Z2), der Informationen zur Verschlüsselung sowie des Schlüssels (K) und unter Verwendung der Kommunikationsbeschreibung oder der mittels Anwendung des Algorithmus zur Dateninterpretation gewonnenen Informationen,
• Versenden der zweiten gesicherten Nachrichten an das zu testende Empfängergerät.

2. Verfahren nach Anspruch 1, wobei eine Nachricht über mehrere Nachrichtenpakete verteilt versendet wird.

3. Verfahren nach Anspruch 1 oder 2, wobei das Empfängergerät ein reales Steuergerät ist oder ein virtuelles Steuergerät ist.

4. Verfahren nach einem der vorstehenden Ansprüche, wobei auch die Nutzlast (PDU) der ersten gesicherten Nachrichten unter Verwendung des ersten Zählerwerts (Z1) verschlüsselt ist und die Nutzlast (PDU) in der Wiedergabeeinheit (R) entschlüsselt und mittels der Verschlüsselung und des zweiten Zählerwerts (Z2) wieder verschlüsselt wird.

5. Verfahren nach einem der vorstehenden Ansprüche, wobei die Nachrichten Dienste enthalten, insbesondere Netzwerk- oder Systemdienste.

6. Verfahren nach einem der vorstehenden Ansprüche, wobei das Nachrichtensystem gegeben ist durch ein reales oder simuliertes Bus-Kommunikationssystem oder ein reales oder simuliertes Netzwerk oder eine Kombination aus Bussystem und Netzwerk, insbesondere durch ein automotives Nachrichtensystem.

7. Verfahren nach einem der vorstehenden Ansprüche, wobei die Informationen zur Verschlüsselung auch Informationen umfassen, um die zweiten gesicherten Nachrichten zu Testzwecken derart zu erstellen, dass sie vom Empfängergerät als fehlerhaft erkannt werden sollten.

8. Wiedergabeeinheit (R) zum Versenden gesicherter Nachrichten über ein Nachrichtensystem an ein zu testendes Empfängergerät, wobei die Wiedergabeeinheit (R) über das Nachrichtensystem mit dem zu testenden Empfängergerät verbunden ist, wobei die Wiedergabeeinheit (R) eingerichtet ist, wiederzugebende erste gesicherte Nachrichten zu erhalten, aus den ersten gesicherten Nachrichten einen ersten Zählerwert (Z1) und einen ersten Authenticator (MAC1) zu entfernen und mittels eines zweiten Zählerwerts (Z2), eines Verschlüsselungsalgorithmus und eines Schlüssels (K) einen zweiten Authenticator (MAC2) zu erzeugen, wobei der zweite Zählerwert (Z2) jeweils durch den der Testumgebung bekannten aktuellen Zählerwert für das zu testende Empfängergerät gegeben ist oder wobei der zweite Zählerwert (Z2) durch einen von einem Benutzer vorgegeben Zählerwert oder durch einen automatisch berechneten Zählerwert gegeben ist,
und wobei die Wiedergabeeinheit (R) eingerichtet ist, durch Hinzufügen des zweiten Zählerwerts (Z2) und des zweiten Authenticators (MAC2) zu den ersten Nachrichten zweite gesicherte Nachrichten zu erzeugen und wobei die Wiedergabeeinheit weiter eingerichtet ist, die zweiten gesicherten Nachrichten über das Nachrichtensystem an das zu testende Empfängergerät zu versenden.

9. Wiedergabeeinheit (R) nach Anspruch 8, wobei die Wiedergabeeinheit (R) als (Zusatz-)Einheit für einen Hardware-in-the-Loop (HIL)-Simulator und/oder für einen Simulator zur virtuellen Absicherung ausgestaltet ist.

## Claims

1. A method for sending recorded, secured messages via a messaging system to a receiving device to be tested, the messages being sent by means of message packets, the method comprising the following steps:
• providing first secured messages for processing in a playback unit (R), the first messages comprising a payload (PDU), a first counter value (Z1), and a first authenticator (MAC1), **characterized in that** the following information is provided to the playback unit:
o at least parts of a communication description for the receiving device to be tested or an algorithm for data interpretation,
o a second counter value (Z2) for the receiving device to be tested, wherein the second counter value (Z2) is provided by the current counter value known to the test environment for the receiving device to be tested in each case, or wherein the second counter value (Z2) is provided by a counter value specified by a user or by an automatically calculated counter value,
o information for encrypting and a corresponding key (K)
• by means of the playback unit:
o removing the first authenticator (MAC1) and the first counter value (Z1) from the first secured messages by using the communication description or by using information obtained by means of the algorithm for data interpretation
∘ creating second secured messages by adding the second counter value (Z2) in each case and creating and adding a second authenticator (MAC2) in each case by using the second counter value(Z2), the information for encrypting, and the key (K), and by using the communication description or the information obtained by means of applying the algorithm for data interpretation,
• sending the second secured messages to the receiving device to be tested.

2. The method according to claim 1, wherein a message is sent distributed across a plurality of message packets.

3. The method according to claim 1 or 2, wherein the receiving device is a real control device or a virtual control device.

4. The method according to any one of the preceding claims, wherein the payload (PDU) of the first secured messages is also encrypted by using the first counter value (Z1) and the payload (PDU) is decrypted in the playback unit (R) and is again encrypted by means of the encryption and the second counter value (Z2).

5. The method according to any one of the preceding claims, wherein the messages comprise services, particularly network or system services.

6. The method according to any one of the preceding claims, wherein the messaging system is provided by a real or simulated bus communication system or a real or simulated network or a combination of a bus system and network, particularly by an automotive messaging system.

7. The method according to any one of the preceding claims, wherein the information for encrypting also comprises information for creating the second secured messages for test purposes such that said messages are to be identified as defective by the receiving device.

8. A playback unit (R) for sending secured messages via a messaging system to a receiving device to be tested, the playback unit (R) being connected to the receiving device to be tested via the messaging system, the playback unit (R) being configured for receiving first secured messages to be played back, for removing a first counter value (Z1) and a first authenticator (MAC1) from the first secured messages, and for generating a second authenticator (MAC2) by means of a second counter value (Z2), an encrypting algorithm, and a key (K), wherein the second counter value (Z2) is provided by the current counter value known to the test environment for the receiving device to be tested in each case, or wherein the second counter value (Z2) is provided by a counter value specified by a user or by an automatically calculated counter value, and wherein the playback unit (R) is configured for generating second secured messages by adding the second counter value (Z2) and the second authenticator (MAC2) to the first messages, and wherein the playback unit is further configured for sending the second secured messages to the receiving device to be tested via the messaging system.

9. The playback unit (R) according to claim 8, wherein the playback unit (R) is implemented as an (accessory) unit for a hardware-in-the-loop (HIL) simulator and/or for a simulator for virtual validation.

## Revendications

1. Procédé pour envoyer des messages sécurisés enregistrés par l'intermédiaire d'un système de messagerie à un appareil récepteur à tester, les messages étant envoyés au moyen de paquets de messages, le procédé comprenant les étapes suivantes :
• fournir de premiers messages sécurisés en vue du traitement dans une unité de lecture (R), les premiers messages comprenant une charge utile (PDU), une première valeur de compteur (Z1) et un premier authentificateur (MAC1), **caractérisé en ce que** les informations suivantes sont fournies à l'unité de lecture :
o au moins des parties d'une description de communication pour l'appareil récepteur à tester ou un algorithme d'interprétation des données,
o une deuxième valeur de compteur (Z2) pour l'appareil récepteur à tester, la deuxième valeur de compteur (Z2) étant donnée à chaque fois par la valeur de compteur actuelle connue de l'environnement de test pour le dispositif récepteur à tester ou la deuxième valeur de compteur (Z2) étant donnée par une valeur de compteur allouée par un utilisateur ou par une valeur de compteur calculée automatiquement,
o des informations sur le chiffrement et une clé correspondante (K),
• au moyen de l'unité de lecture :
∘ suppression du premier authentificateur (MAC1) et de la première valeur de compteur (Z1) des premiers messages sécurisés par utilisation de la description de communication ou par utilisation d'informations obtenues au moyen de l'algorithme d'interprétation des données
o créer des deuxièmes messages sécurisés par ajout, à chaque fois, de la deuxième valeur de compteur (Z2) et création et ajout, à chaque fois, d'un deuxième authentificateur (MAC2) par utilisation de la deuxième valeur de compteur (Z2), des informations de chiffrement ainsi que de la clé (K) et par utilisation de la description de communication ou des informations obtenues par utilisation de l'algorithme d'interprétation de données,
• envoi des deuxièmes messages sécurisés à l'appareil récepteur à tester.

2. Procédé selon la revendication 1, dans lequel un message est envoyé réparti en plusieurs paquets de messages.

3. Procédé selon la revendication 1 ou 2, dans lequel l'appareil récepteur est un appareil de commande réel ou un appareil de commande virtuel.

4. Procédé selon l'une quelconque des revendications précédentes, dans lequel la charge utile (PDU) des premiers messages sécurisés est également chiffrée par utilisation de la première valeur de compteur (Z1) et la charge utile (PDU) est déchiffrée dans l'unité de lecture (R) et chiffrée à nouveau à l'aide du chiffrement et de la deuxième valeur de compteur (Z2).

5. Procédé selon l'une quelconque des revendications précédentes, dans lequel les messages contiennent des services, en particulier des services réseau ou système.

6. Procédé selon l'une quelconque des revendications précédentes, dans lequel le système de messagerie est donné par un système de communication par bus réel ou simulé ou par un réseau réel ou simulé ou par une combinaison de système de bus et de réseau, en particulier par un système de messagerie automobile.

7. Procédé selon l'une quelconque des revendications précédentes, dans lequel les informations pour le chiffrement comprennent également des informations pour créer les deuxièmes messages sécurisés à des fins de test de sorte qu'ils devraient être détectés comme erronés par l'appareil récepteur.

8. Unité de lecture (R) pour envoyer des messages sécurisés par l'intermédiaire d'un système de messagerie à un appareil récepteur à tester, l'unité de lecture (R) étant connectée à l'appareil récepteur à tester par l'intermédiaire du système de messagerie, l'unité de lecture (R) étant configurée pour recevoir de premiers messages sécurisés à lire, supprimer des premiers messages sécurisés une première valeur de compteur (Z1) et un premier authentificateur (MAC1) et générer un deuxième authentificateur (MAC2) au moyen d'une deuxième valeur de compteur (Z2), d'un algorithme de chiffrement et d'une clé (K), la deuxième valeur de compteur (Z2) étant donnée à chaque fois par la valeur de compteur actuelle connue de l'environnement de test pour le dispositif récepteur à tester ou la deuxième valeur de compteur (Z2) étant donnée par une valeur de compteur allouée par un utilisateur ou par une valeur de compteur calculée automatiquement, et dans lequel l'unité de lecture (R) est configurée pour générer de deuxièmes messages sécurisés par ajout de la deuxième valeur de compteur (Z2) et du deuxième authentificateur (MAC2) aux premiers messages et dans lequel l'unité de lecture est en outre configurée pour envoyer les deuxièmes messages sécurisés à l'appareil récepteur à tester via le système de messagerie.

9. Unité de lecture (R) selon la revendication 8, l'unité de lecture (R) est conçue comme une unité (supplémentaire) pour un simulateur matériel-dans-la-boucle (HIL) et/ou pour un simulateur de protection virtuelle.
